# EUROPÄISCHE PATENTANMELDUNG

(11) **EP 2 327 294 A1**
(43) Veröffentlichungstag der Anmeldung: **01.06.2011**
(21) Anmeldenummer: 10192019.7
(22) Anmeldetag: 22.11.2010
(51) Int. Cl.: A01G 9/14

(54) **Klappbare Auflagefläche, insbesondere für ein Gewächshaus**

(30) Priorität: 30.11.2009 DE 202009015671 U
(71) Anmelder: ISC GmbH, 94405 Landau an der Isar (DE)
(72) Erfinder: Arbinger, Wolfgang, 94428, Eichendorf / Aufhausen (DE)
(74) Vertreter: Benninger, Johannes

(57) **Zusammenfassung**

Die Erfindung betrifft eine klappbare Auflagefläche (20), die sich insbesondere für eine Innenwand (22) eines Gewächshauses (10) eignet. Die Erfindung betrifft weiterhin ein solches Gewächshaus (10) mit einem Metall-, insbesondere Leichtmetallgerüst, das aus Streben (12) und Profilen (14) gebildet ist und transparente oder teiltransparente Kunststoffplatten (16) als Abdeckungen, Wände, Türen und/oder Fenster aufweist, wobei die Kunststoffplatten (16) jeweils von einem umlaufenden Rahmen (18), der aus den Profilen (14) und/oder Streben (12) gebildet ist, gehalten sind. Die Erfindung ist dadurch gekennzeichnet, dass die wenigstens eine klappbare Auflagefläche (20), die an der Innenwand (22) des Gewächshauses (10) angeordnet ist, um eine horizontale Achse zwischen einer horizontalen Betriebslage und einer vertikalen Ruhelage verschwenkbar ist.

## Beschreibung

Die Erfindung betrifft eine klappbare Auflagefläche, die sich insbesondere für eine Innenwand eines Gewächshauses eignet. Die Erfindung betrifft weiterhin ein solches Gewächshaus mit einem Metall-, insbesondere Leichtmetallgerüst, das aus Streben und Profilen gebildet ist und transparente oder teiltransparente Kunststoffplatten als Abdeckungen, Wände, Türen und/oder Fenster aufweist, wobei die Kunststoffplatten jeweils von einem umlaufenden Rahmen, der aus den Profilen und/oder Streben gebildet ist, gehalten sind.

Derartige Gewächshäuser sind in zahlreichen Ausführungsvarianten bekannt. So zeigt bspw. die DE 20 2006 007 052 U1 ein zerlegbares Gewächshaus, das aus einem fachwerkartigen Rahmen und mehreren darin gehaltenen, lichtdurchlässigen Stegplatten besteht. Aus der DE 20 2007 005 638 U1 ist weiterhin ein modulares Gewächshaus bekannt, das aus einem fachwerkartigen Rahmen und teilweise darin gehaltenen Wänden aus durchsichtigem oder lichtdurchlässigem oder blickdichtem Material gebildet ist. Die DE 20 2008 013 767 U1 offenbart weiterhin ein Gewächshaus, bei dem die Profile oder Streben an ihren Verbindungsstellen vormontierte Gewindeelemente zur gegenseitigen Fixierung bzw. Verschraubung aufweisen.

Sollen die Gewächshäuser nicht nur zur Einhausung von im Boden wachsenden Pflanzen oder am Boden stehenden Pflanzbehältnissen bzw. Töpfen dienen, so werden üblicherweise Regale im Inneren aufgestellt, auf denen in mehreren Lagen Pflanztöpfe stehen können. Nachteilig an diesen Anordnungen sind die teilweise ungünstigen Lichtverhältnisse für die Pflanzen sowie der zusätzliche Aufwand für die Aufstellung der Regale.

Ein Ziel der vorliegenden Erfindung besteht darin, ein universell verwendbares Gewächshaus bzw. eine variable Abstellmöglichkeit für Pflanzen in einem Gewächshaus zur Verfügung zu stellen, bei dem der Innenraum in seiner Aufteilung und/oder Nutzungsmöglichkeit variabel gestaltbar ist.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen. Der unabhängige Anspruch definiert die Erfindung als klappbare Auflagefläche, insbesondere für ein Gewächshaus und/oder als solches Gewächshaus mit einem Metall-, insbesondere Leichtmetallgerüst, das aus Streben und Profilen gebildet ist und transparente oder teiltransparente Kunststoffplatten als Abdeckungen, Wände, Türen und/oder Fenster aufweist. Die Kunststoffplatten sind jeweils von einem umlaufenden Rahmen, der aus den Profilen und/oder Streben gebildet ist, gehalten. Zudem ist wenigstens eine klappbare Auflagefläche an einer Innenwand des Gewächshauses vorgesehen, die um eine horizontale Achse zwischen einer horizontalen Betriebslage und einer vertikalen Ruhelage verschwenkbar ist. Diese klappbare Auflagefläche weist vorzugsweise einen umlaufenden Rahmen und eine darin gehaltene, zumindest teiltransparente Kunststoffplatte auf, so dass die klappbare Auflagefläche in ihrem Aufbau im Wesentlichen der Gewächshauskonstruktion gleicht und wie diese durch einen umlaufenden Rahmen und eine darin fixierte transparente oder teiltransparente Kunststoffplatte gebildet ist. In einem nach oben geklappten Zustand ist die, einen Auflagetisch bildende Auflagefläche somit sehr schmal und reduziert nicht den nutzbaren Innenraum des Gewächshauses. Zudem sorgt ihre transparente Fläche dafür, dass der Lichteinfall nur minimal reduziert ist, da das Licht durch die Fläche nahezu ungehindert hindurch treten kann.

Die klappbare Auflagefläche kann insbesondere eine Breite aufweisen, die einem Abstand zweier benachbarter vertikaler Stützstreben des Gewächshauses entspricht. Wahlweise kann die Breite der Auflagefläche auch so bemessen sein, dass sie zwischen drei oder mehr benachbarten Stützstreben des Gewächshauses angeordnet sein kann, so dass ungefähr mittig zwischen den beiden Schmalseiten der Auflagefläche eine weitere Stützstrebe angeordnet ist.

Eine besonders bevorzugte Variante der Erfindung sieht vor, dass der umlaufende Rahmen der klappbaren Auflagefläche in Scharnierelementen gelagert ist, die in benachbarten vertikalen Stützstreben des Gewächshauses verankert sind. Hierbei kann die vertikale Ruhelage durch eine verriegelbare, parallele Anlage der klappbaren Auflagefläche an einer der vertikalen Wände des Gewächshauses definiert sein. Zudem kann die klappbare Auflagefläche in seiner horizontalen Betriebslage durch wenigstens eine dem Scharnier zugeordnete Sperreinrichtung gehalten sein. Dabei ist es sinnvoll, die klappbare Auflagefläche in seiner horizontalen Betriebslage durch wenigstens eine an der vertikalen Stützstrebe des Gewächshauses angeordnete, verschwenkbare Zugstrebe oder durch ein Zugseil zu halten. Die klappbare Auflagefläche kann gemäß der zuvor beschriebenen Ausführungsvarianten an einer beliebigen Seitenwand des Gewächshauses angeordnet, gehalten und zwischen ihrer Ruhelage und ihrer Betriebslage verschwenkt werden, um als variables Regalsystem zur Ablage kleinerer Pflanzen oder Töpfe zu dienen, die darauf abgestellt werden können, wenn die Ablage nach unten geschwenkt und in ihrer horizontalen Lage gehalten ist.

Die wenigstens eine Auflagefläche kann bspw. in Schienensystemen gehalten sein, die an den Stützstreben verankert werden können. Dieses Schienensystem kann bspw. eine U-förmige Strebe zu jeder Seite des Auflagetischs bzw. der klappbaren Auflagefläche umfassen. Diese U-förmigen Streben können mit ihrer offenen Seite zum Innenraum des Gewächshauses gerichtet an den Stützstreben verankert werden, bspw. durch Verschrauben oder Vernieten. Die U-förmigen Haltestreben können vorzugsweise die Scharniere und Halteeinrichtungen etc. umfassen und vorzugsweise so an den Stützstreben befestigt werden, dass mehrere solcher Module nebeneinander angeordnet werden können. D.h., die Haltestreben sollten vorzugsweise eine Breite aufweisen, die höchstens der halben Breite einer Stützstrebe des Gewächshauses entspricht, so dass an jeder Stützstrebe wahlweise eine oder zwei U-förmige Haltestreben befestigt werden können. Selbstverständlich sind auch Varianten denkbar, bei denen die klappbaren Auflageflächen bzw. Auflagetische eine Breite aufweisen, die dem doppelten Abstand zweier benachbarter Stützstreben entspricht, so dass mittig zwischen zwei Schmalseiten der Auflageflächen mit daran schwenkbar gelagerten Scharnieren eine weitere Stützstrebe des Gewächshauses angeordnet ist.

Wahlweise können auch zwei oder mehr klappbare Auflageflächen gleicher oder unterschiedlicher Größen an mehreren Stellen der Innenwände des Gewächshauses angeordnet sein. So können insbesondere zwei oder mehr klappbare Auflageflächen in übereinander liegenden Positionen an einer der Seitenwände des Gewächshauses angeordnet sein. Bei dieser Anordnung kann es von Vorteil sein, wenn die übereinander angeordneten Auflageflächen in ihrer an der Seitenwand anliegenden Ruhelage mit ihren Längsseiten jeweils aneinander grenzen oder gering voneinander beabstandet sind.

Die Verriegelung der klappbaren Auflageflächen in ihrer vertikalen Ruhelage kann wahlweise durch eine geeignete Scharniergestaltung und/oder durch einen gesonderten Verriegelungshebel an einer oberen Längsseite der Auflagefläche erfolgen. In der ausgeklappten Betriebslage, die normalerweise durch eine horizontale Lage der Auflagefläche gekennzeichnet ist, bei der die Ablage senkrecht zur vertikalen Seitenwand des Gewächshaus zum Liegen kommt, ist keine weitere Fixierung erforderlich als der unverzichtbare mechanische Anschlag, der den Schwenkwinkel der Auflagefläche begrenzt, damit diese nicht über die horizontale Betriebslage hinaus bewegbar ist. Diese Anschlagbegrenzung kann bspw. durch ein Zugseil realisiert sein, das zwischen einem oberhalb der Scharnierlage angeordneten Anlenkpunkt an der vertikalen Stützstrebe des Gewächshauses, an dem auch die Auflagefläche gelagert ist und einer der Schmalseiten der normalerweise rechteckförmig gestalteten Auflagefläche angeordnet ist. Wahlweise kann die Anschlagbegrenzung auch durch eine an der Stützstrebe des Gewächshauses drehbar gelagerte und an der Schmalseite des Rahmens der Auflagefläche in einem Langloch verschiebbare Haltestange o. dgl. gebildet sein. Eine weitere Möglichkeit besteht in der Realisierung des mechanischen Anschlags durch eine entsprechende Scharniergestaltung, was jedoch ein ausreichend stabiles Scharnier und eine ausreichend stabile Stützstrebe am Anlenkpunkt des Scharniers bedingt.

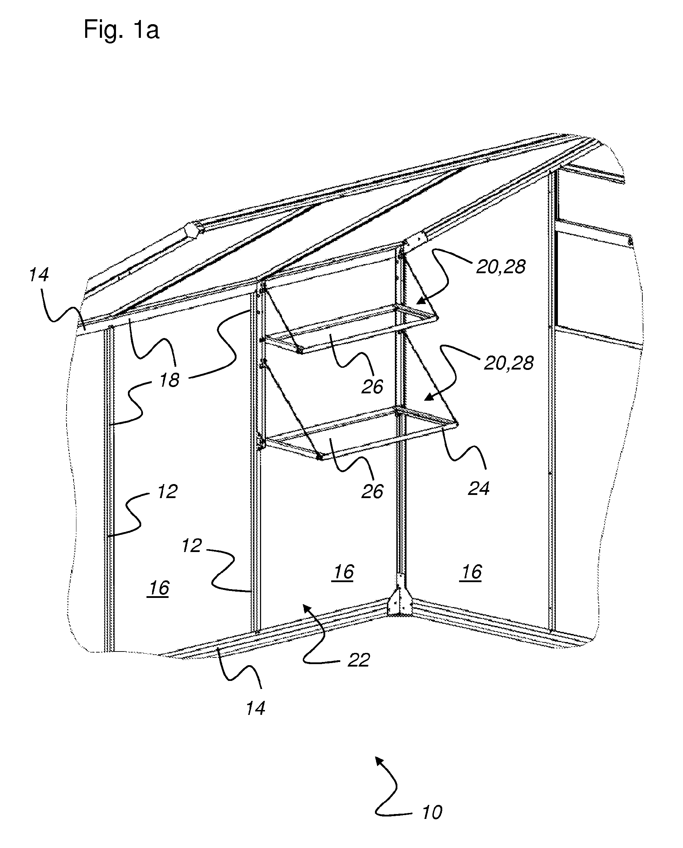

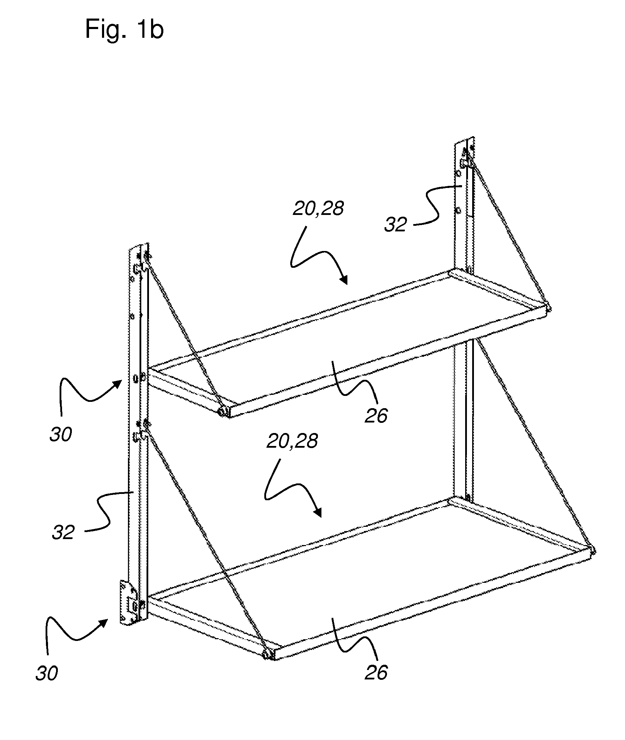

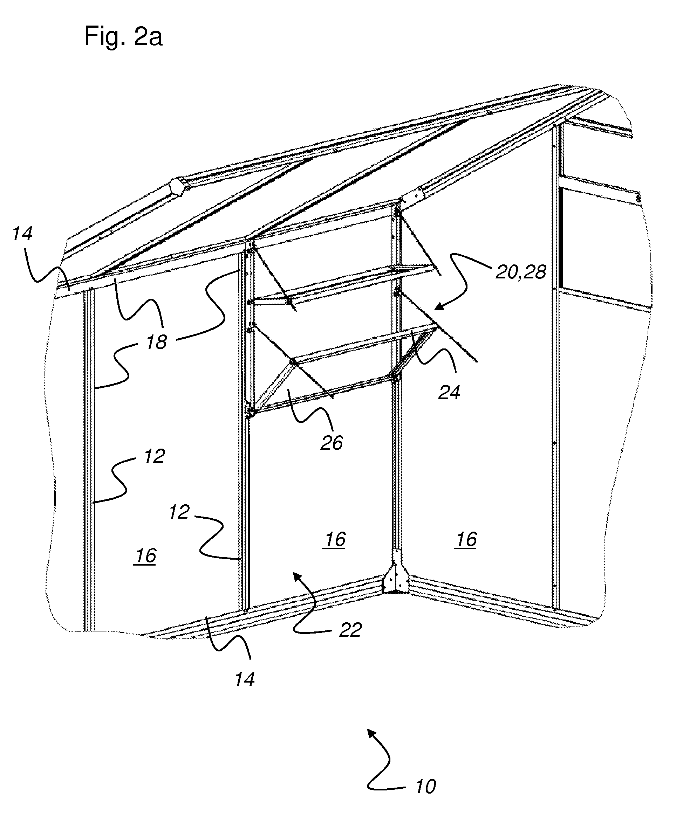

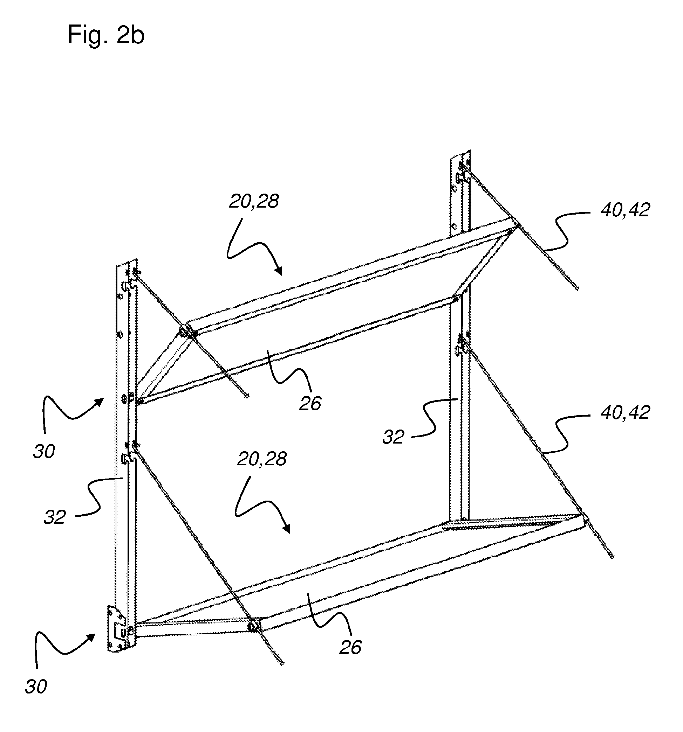

Die Erfindung wird nachfolgend anhand eines bevorzugten Ausführungsbeispiels unter Bezugnahme auf die beiliegende Zeichnung näher erläutert. Das in den Figuren 1 bis 4 dargestellte Ausführungsbeispiel ist beispielhaft zu verstehen und stellt keine Einschränkung des erfinderischen Gedankens dar. Gleiche Teile in den Figuren 1 bis 4 sind mit gleichen Bezugsziffern bezeichnet; eine mehrfache Erläuterung erübrigt sich an einigen Stellen.
Fig. 1a zeigt eine schematische Perspektivdarstellung eines Teils eines Gewächshauses in einer Innenansicht.
Fig. 1b zeigt eine schematische Perspektivdarstellung eines Ausführungsbeispiels zweier übereinander angeordneter Auflageflächen im ausgeklappten Zustand.
Fig. 2 zeigt in zwei schematischen Perspektivdarstellungen die Auflageflächen im teilweise nach oben geschwenkten Zustand.
Fig. 3 zeigt in zwei schematischen Perspektivdarstellungen die Auflageflächen im nach oben geschwenkten Zustand, bei dem die Auflageflächen vertikal an einer Wand anliegen.
Fig. 4 zeigt eine Detailansicht eines Teils des Schwenkmechanismus für die Auflageflächen.
Fig. 5 zeigt eine Detailansicht eines weiteren Teils des Schwenkmechanismus für die Auflageflächen.

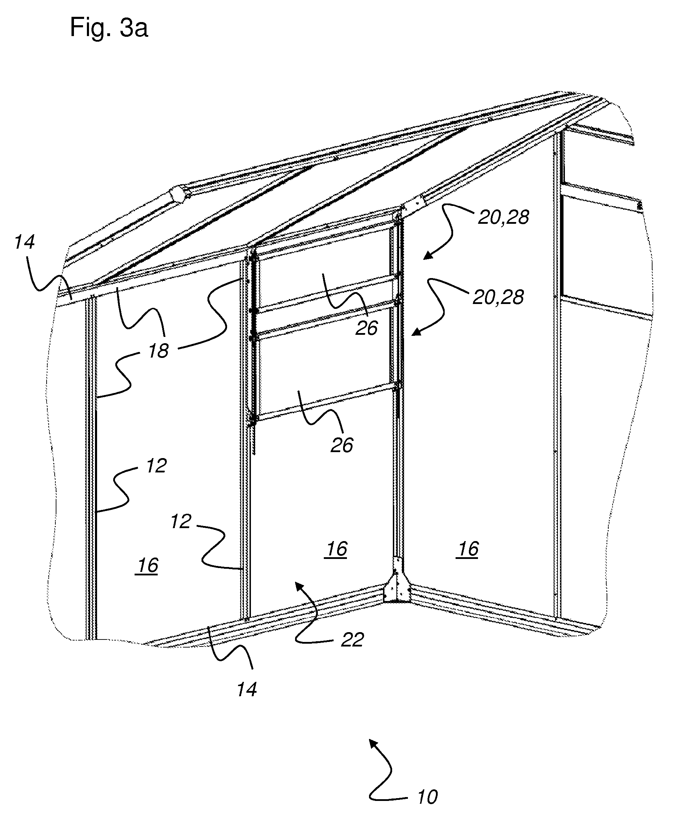

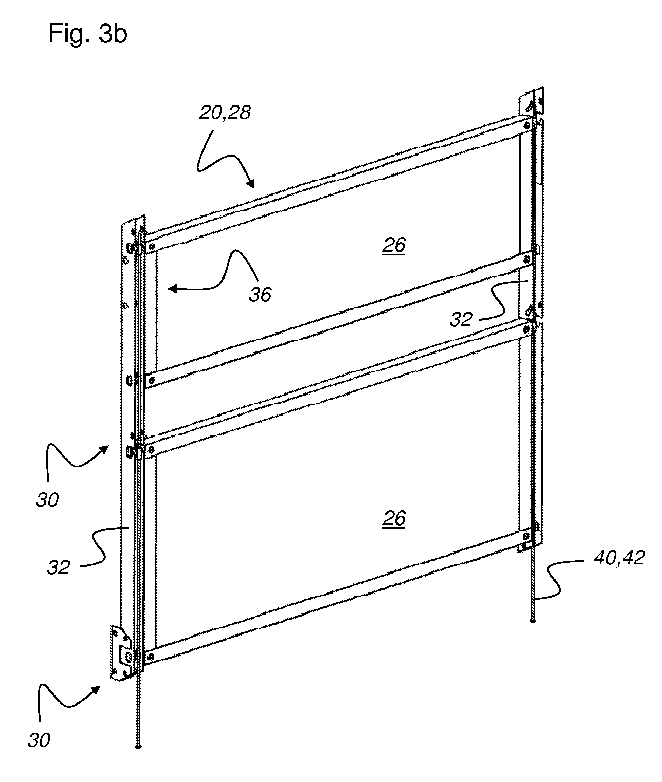

Die schematische Perspektivdarstellung der Fig. 1 zeigt ein Gewächshaus 10 mit einem Leichtmetallgerüst, das aus Streben 12 und/oder Profilen 14 gebildet ist und transparente oder teiltransparente Kunststoffplatten 16 als Abdeckungen, Wände, Türen und/oder Fenster aufweist. Die Kunststoffplatten 16 sind jeweils von einem umlaufenden Rahmen 18, der aus den Profilen 14 und/oder den Streben 12 gebildet ist, gehalten. Zudem sind zwei klappbare Auflageflächen 20 an einer Innenwand 22 des Gewächshauses 10 angeordnet, die jeweils um eine horizontale Achse zwischen einer horizontalen Betriebslage (Fig. 1a, Fig. 1b) und einer vertikalen Ruhelage (Fig. 3a, Fig. 3b) verschwenkbar sind. Die klappbaren Auflageflächen 20 weisen jeweils einen umlaufenden Rahmen 24 und eine darin gehaltene, zumindest teiltransparente Kunststoffplatte 26 auf und bilden damit jeweils klappbare Auflagetische 28. Die klappbaren Auflageflächen 20 bzw. Auflagetische 28 gleichen in ihrem Aufbau im Wesentlichen der Gewächshauskonstruktion und sind wie diese durch einen umlaufenden Rahmen 24 und eine darin fixierte transparente oder teiltransparente Kunststoffplatte 26 gebildet. In ihrem nach oben geklappten Zustand gemäß Fig. 3 ist die, den Auflagetisch 28 bildende Auflagefläche 20 somit sehr schmal und reduziert nicht den nutzbaren Innenraum des Gewächshauses 10. Zudem sorgt ihre transparente Fläche dafür, dass der Lichteinfall nur minimal reduziert ist, da das Licht durch die Fläche nahezu ungehindert hindurch treten kann.

Die beiden klappbaren Auflageflächen 20 weisen im gezeigten Ausführungsbeispiel jeweils eine Breite auf, die einem Abstand zweier benachbarter vertikaler Stützstreben 12 des Gewächshauses 10 entspricht. Wahlweise könnte die Breite der Auflagefläche 20 auch so bemessen sein, dass sie zwischen drei oder mehr benachbarten Stützstreben 12 des Gewächshauses 10 angeordnet sein kann, so dass ungefähr mittig zwischen den beiden Schmalseiten der Auflagefläche 20 eine weitere Stützstrebe 12 angeordnet ist. Diese Variante ist jedoch in den anliegenden Figuren nicht zeichnerisch dargestellt.

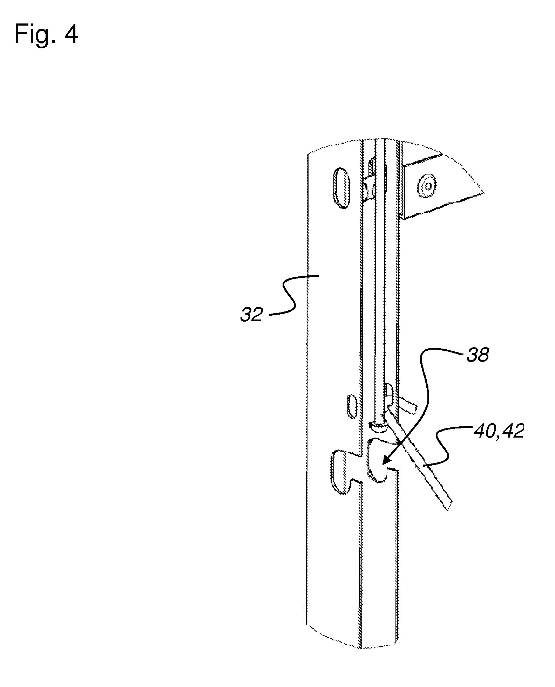

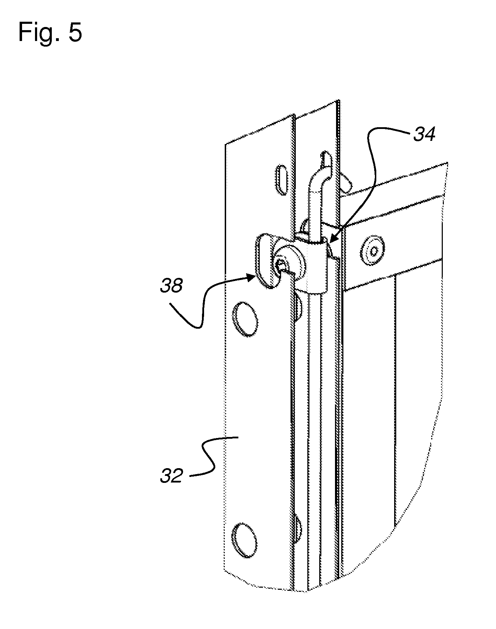

Die in den Figuren 1 bis 5 dargestellte Ausführungsvariante der Erfindung sieht vor, dass der umlaufende Rahmen 24 der klappbaren Auflagefläche 20 bzw. des klappbaren Auflagetischs 28 in Scharnieren 30 gelagert ist, die über U-förmige, vertikal angeordnete Halteschienen 32 in benachbarten vertikalen Stützstreben 12 des Gewächshauses 10 verankert sind. Die vertikale Ruhelage der Auflagetische 28 ist entsprechend Fig. 3b und Fig. 5 durch eine verriegelbare, parallele Anlage des klappbaren Auflagetischs 28 an der vertikalen Wand 22 des Gewächshauses 10 definiert. Hierbei ist ein Haken oder Zapfen 34 an einer Ecke der Schmalseite 36 des Rahmens 24 in einer hakenförmigen Ausnehmung 38 eingehängt, wie dies in den Figuren 4 und 5 erkennbar ist. Zudem ist der klappbare Auflagetisch 28 in seiner horizontalen Betriebslage (vgl. Fig. 1) durch wenigstens eine dem Scharnier 30 zugeordnete Sperreinrichtung 40 in Gestalt einer oder zwei an den beiden Schmalseiten 36 angeordneten Zugstreben 42 gehalten. Auf diese Weise ist die klappbare Auflagefläche 20 in ihrer horizontalen Betriebslage durch die beiden an den Halteschienen 32 bzw. an der vertikalen Stützstrebe 12 des Gewächshauses 10 angeordnete, verschwenkbaren Zugstreben 42 gehalten.

Die klappbaren Auflageflächen 20 können gemäß der zuvor beschriebenen Ausführungsvarianten an einer beliebigen Seitenwand 22 des Gewächshauses 10 angeordnet, gehalten und zwischen ihrer Ruhelage und ihrer Betriebslage verschwenkt werden, um als variables Regalsystem zur Ablage kleinerer Pflanzen oder Töpfe zu dienen, die darauf abgestellt werden können, wenn die Ablage nach unten geschwenkt und in ihrer horizontalen Lage gehalten ist.

Wie in den Figuren 1 bis 5 erkennbar, sind die Auflageflächen 20 jeweils in Schienensystemen gehalten, die an den Stützstreben 12 verankert sind. Das Schienensystem ist durch jeweils eine U-förmige Strebe bzw. Halteschiene 32 zu jeder Seite des Auflagetischs 28 bzw. der klappbaren Auflagefläche 20 gebildet. Diese U-förmigen Streben bzw. Halteschienen 32 sind mit ihren offenen Seiten zum Innenraum des Gewächshauses 10 gerichtet und an den vertikalen Stützstreben 12 verankert, bspw. durch Verschrauben oder Vernieten. Die U-förmigen Haltestreben bzw. Halteschienen 32 tragen die Scharniere 30 und Halteeinrichtungen etc. und sind vorzugsweise so an den Stützstreben 12 befestigt, dass mehrere solcher Module nebeneinander angeordnet werden können. D.h., die Halteschienen 32 können vorzugsweise eine Breite aufweisen, die höchstens der halben Breite einer Stützstrebe 12 des Gewächshauses 10 entspricht, so dass an jeder Stützstrebe 12 wahlweise eine oder zwei U-förmige Halteschienen 32 befestigt werden können.

Wie in den Figuren dargestellt, können zwei klappbare Auflageflächen 20 unterschiedlicher Größe übereinander an gemeinsamen Schienenpaaren 32 aufgehängt sein. Wahlweise können jedoch weniger oder mehr klappbare Auflageflächen 20 gleicher oder unterschiedlicher Größen an mehreren Stellen der Innenwände 22 des Gewächshauses 10 angeordnet sein. So können entsprechend der Darstellung zwei oder auch mehr klappbare Auflageflächen 20 in übereinander liegenden Positionen an einer der Seitenwände des Gewächshauses 10 angeordnet sein. Bei dieser Anordnung grenzen die übereinander angeordneten Auflageflächen 20 in ihrer an der Seitenwand 22 anliegenden Ruhelage mit ihren Längsseiten jeweils aneinander oder sind gering voneinander beabstandet.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste:

- 10: Gewächshaus
- 12: Strebe
- 14: Profil
- 16: Kunststoffplatte
- 18: Rahmen
- 20: Auflagefläche
- 22: Innenwand
- 24: umlaufender Rahmen
- 26: Kunststoffplatte
- 28: Auflagetisch
- 30: Scharnier
- 32: Halteschiene
- 34: Zapfen
- 36: Schmalseite
- 38: hakenförmige Ausnehmung
- 40: Sperreinrichtung
- 42: Zugstrebe

## Patentansprüche

1. Klappbare Auflagefläche, insbesonders für ein Gewächshaus (10) bzw. eine Innenwand (22) eines Gewächshauses (10), das ein Metall-, insbesondere Leichtmetallgerüst aufweist, das aus Streben (12) und Profilen (14) gebildet ist und transparente oder teiltransparente Kunststoffplatten (16) als Abdeckungen, Wände, Türen und/oder Fenster aufweist, wobei die Kunststoffplatten (16) jeweils von einem umlaufenden Rahmen (18), der aus den Profilen (14) und/oder Streben (12) gebildet ist, gehalten sind, **dadurch gekennzeichnet, dass** die wenigstens eine klappbare Auflagefläche (20), die an der Innenwand (22) des Gewächshauses (10) angeordnet ist, um eine horizontale Achse zwischen einer horizontalen Betriebslage und einer vertikalen Ruhelage verschwenkbar ist.

2. Klappbare Auflagefläche nach Anspruch 1, die einen umlaufenden Rahmen (24) und eine darin gehaltene, zumindest teiltransparente Kunststoffplatte (26) aufweist.

3. Klappbare Auflagefläche nach Anspruch 1 oder 2, die einen Auflagetisch (28) bildet.

4. Klappbare Auflagefläche nach einem der Ansprüche 1 bis 3, die von der annähernd horizontalen Betriebslage nach oben in die vertikale Ruhelage verschwenkbar ist.

5. Klappbare Auflagefläche nach einem der Ansprüche 1 bis 4, die eine Breite aufweist, die einem Abstand zweier benachbarter vertikaler Stützstreben (12) des Gewächshauses (10) entspricht.

6. Klappbare Auflagefläche nach einem der Ansprüche 1 bis 5, bei dem der umlaufende Rahmen (24) der klappbaren Auflagefläche (20) in Scharnierelementen (30) gelagert ist, die in benachbarten vertikalen Stützstreben (12) des Gewächshauses (10) verankert sind.

7. Klappbare Auflagefläche nach einem der Ansprüche 1 bis 6, bei dem die vertikale Ruhelage durch eine verriegelbare, parallele Anlage der klappbaren Auflagefläche (20) an einer der vertikalen Wände (22) des Gewächshauses (10) definiert ist.

8. Klappbare Auflagefläche nach einem der Ansprüche 1 bis 7, die in ihrer horizontalen Betriebslage durch wenigstens eine dem Scharnier (30) zugeordnete Sperreinrichtung (40) gehalten ist.

9. Klappbare Auflagefläche nach einem der Ansprüche 1 bis 7, die in ihrer horizontalen Betriebslage durch wenigstens eine an der vertikalen Stützstrebe (12) des Gewächshauses (10) angeordnete, verschwenkbare Zugstrebe (42) oder durch ein Zugseil gehalten ist.

10. Gewächshaus (10) mit einem Metall-, insbesondere Leichtmetallgerüst, das aus Streben (12) und Profilen (14) gebildet ist und transparente oder teiltransparente Kunststoffplatten (16) als Abdeckungen, Wände, Türen und/oder Fenster aufweist, wobei die Kunststoffplatten (16) jeweils von einem umlaufenden Rahmen (18), der aus den Profilen (14) und/oder Streben (12) gebildet ist, gehalten sind, **gekennzeichnet durch** wenigstens eine klappbare Auflagefläche (20), insbesondere gemäß einem der Ansprüche 1 bis 9, an einer Innenwand (22) des Gewächshauses (10), die um eine horizontale Achse zwischen einer horizontalen Betriebslage und einer vertikalen Ruhelage verschwenkbar ist.

11. Gewächshaus nach Anspruch 10, bei dem zwei oder mehr klappbare Auflageflächen (20) gleicher oder unterschiedlicher Größen an mehreren Stellen der Innenwände (22) des Gewächshauses (10) angeordnet sind, wobei die Auflageflächen (20) unabhängig voneinander bewegbar und klappbar sind.

12. Gewächshaus nach Anspruch 10 oder 11, bei dem zwei klappbare Auflageflächen (20) in übereinander liegenden Positionen an einer der Seitenwände (22) des Gewächshauses (10) angeordnet sind.

13. Gewächshaus nach einem der Ansprüche 10 bis 12, bei dem die übereinander angeordneten Auflageflächen (20) in ihrer an der Seitenwand (22) anliegenden Ruhelage mit ihren Längsseiten jeweils aneinander grenzen oder gering voneinander beabstandet sind.
